# EUROPEAN PATENT APPLICATION

(11) **EP 4 684 617 A1**
(43) Date of publication of application: **28.01.2026**
(21) Application number: 25188378.1
(22) Date of filing: 09.07.2025
(51) Int. Cl.: A01B 59/00, A01B 59/042, B60D 1/02, B60D 1/46, B60D 1/52, B60D 1/58

(54) **CLEVIS HITCH ARRANGEMENT**

(30) Priority: 24.07.2024 GB 202410863
(71) Applicant: AGCO International GmbH, 8212 Neuhausen am Rheinfall (CH)
(72) Inventor: MENGELE, Juergen, 87616 Marktoberdorf (DE); Glitz, Hubertus, 87616 Marktoberdorf (DE); Walter, Franz, 87616 Marktoberdorf (DE)
(74) Representative: AGCO Intellectual Property Department

(57) **Abstract**

A storage support (100) for a clevis hitch (13) has a support structure for receiving the clevis hitch (13) after it has been removed from a towing vehicle. The support structure defines an opening (112) for receiving a coupling pin (22) of the clevis hitch (13) to lock the hitch to the support and one more guide members (for use in positioning the hitch for engagement of the coupling pin (22) in the opening (112). For use with an automatic clevis hitch (13), the storage support has an actuator (114) which enters a jaw (21) of the clevis hitch (13) and disengages a coupling pin latch of the clevis hitch (13), when the clevis hitch (13) is fully received by the support structure. This moves the coupling pin (22) to an engagement position in which it is received by the opening (112) of the storage support.

## Description

### FIELD

Embodiments of the present disclosure relate generally to tow hitches, for example for towing agricultural machinery behind a tractor or other towing vehicle. In particular, this disclosure relates to clevis hitches.

### BACKGROUND

Tractors (and other towing vehicles) are operated with various types of implements and as a result there are various ways of attaching these implements to tractors. One known type of hitch is the clevis hitch using a bolt or coupling pin connection. The coupling pin is manually moved into a retracted (raised) position to enable the insertion of a towing eye (drawbar eye) of the implement. When the towing eye is inserted in the correct coupling position, the coupling pin is lowered to an engagement position in which it engages the towing eye and couples the eye securely to the hitch. In standard clevis hitches, the coupling pin is held in the retracted position but must be manually lowered, say using a lever. However, in other clevis hitches, the coupling pin is held in the retracted position against a spring bias by a latch mechanism. When the eye is inserted to the correct coupling position, it releases the latch mechanism and the coupling pin is automatically lowered to engage in the eye. This type of clevis hitch will be referred to as an "automatic clevis hitch".

Clevis hitches are normally attached to generally vertical support rails on a tractor, allowing vertical height adjustment of the coupling point. In some conditions, the clevis hitch may be removed from the supports, for example if an implement is to be attached to the lower links of the three-point hitch and driven from the tractor by a PTO shaft. The PTO shaft for example may be at least partly covered by the clevis hitch and hence it needs to be removed to use the PTO shaft.

The clevis hitch, once removed, is then laid down somewhere in the tractor, e.g. in the cab, in a toolbox or at the area of the steps. This way of storage is often not ideal due to dirt and safety issues.

European Patent EP 2100757 B1, "Tractor Hitches," granted January 19, 2011, shows an example of a clevis hitch, mounted on generally vertical support rails.

### BRIEF SUMMARY

The invention is defined by the claims.

According to examples in accordance with the invention, there is provided a storage support for a clevis hitch of the type having a coupling pin movable between a retracted position and an engagement position, the storage support comprising:
a support structure having a base for receiving the clevis hitch;
the support structure defining an opening for receiving the coupling pin of the clevis hitch when the clevis hitch is located on the base in a coupling position and the coupling pin is moved to the engagement position;

the support structure having at least one guide member for cooperation with the clevis hitch to assist an operator in locating the clevis hitch in the coupling position.

This storage support is for receiving a clevis hitch after it has been removed from the support rails of a towing vehicle such as a tractor. The clevis hitch is slid onto or into the support structure and is guided to the coupling position where the coupling pin of the clevis hitch can be engaged in the opening of the storage support to lock the clevis hitch in position on the storage support. The clevis hitch is typically supported on the base on the support structure and can be slid over the base into the mounting position.

For use with an automatic clevis hitch, the support structure may have an actuator for entering a jaw of the clevis hitch when the clevis hitch is received by the support structure, wherein the actuator is configured to disengage a coupling pin latch of the clevis hitch when the clevis hitch is fully received by the support structure in the coupling position, thereby causing the coupling pin to move from a latched retracted position to the engagement position. The actuator, for example, comprises a terminal for engaging with an actuator pad at the back of the jaw of the automatic clevis hitch.

The actuator emulates a part of a towing eye of a towed vehicle and the sliding emulates the relative movement between the towing eye and the clevis hitch. In this way, when the clevis hitch is fully slid onto or into the support structure, a coupling pin latch (which latches the coupling pin in the retracted position) is released so that the coupling pin locks the clevis hitch to the support structure. This enables an operator simply to move the clevis hitch from the towing vehicle to the support structure, and it then automatically locks to the support structure. The operator does not need to release either hand to complete the operation and can thus manipulate the heavy clevis hitch with both hands.

The at least one guide member may comprise lateral supports each having a guide slot for receiving a lateral locking pin (or a lateral support pin) of the clevis-type hitch. Thus, the clevis hitch is slid into the coupling position by guiding the lateral locking pins along the slots. The slots provide a centering function.

The support structure may further comprise a coupling pin receiver which at least partially defines the opening, the coupling pin receiver comprising a housing for receiving a lower jaw member of the clevis hitch, and wherein the at least one guide member comprises angled side flanges of the housing configured for engagement with a forward surface of the lower jaw member to guide the clevis hitch to the coupling position.

The storage support may further comprise a fixing arrangement for fixing the storage support to a vehicle. Thus, the support is rigidly attached to the vehicle, and the clevis hitch is attached to the support, so it cannot fall off the vehicle.

According to other aspects of the invention, this disclosure may provide a storage support for a clevis type hitch, comprising: a support structure for slidably receiving the clevis hitch; an actuator for entering a jaw of the clevis hitch when the clevis hitch is slidably received by the support structure, and an opening for receiving the coupling pin when it moves to a closed position. The actuator is configured to disengage a coupling pin latch of the clevis hitch when the clevis hitch is fully received by the support structure to move the coupling pin from a latched open to the closed position.

This disclosure may also provide a clevis hitch arrangement comprising: a clevis hitch; and the storage support as described above.

Thus, the combination of the clevis hitch and the support structure is provided (and is called a "clevis hitch arrangement"). The clevis hitch may be an existing design, and the storage support may be designed to receive the existing design (or indeed a set of standardized designs) of the clevis hitch.

For example, the clevis hitch comprises: a jaw; a coupling pin having a retracted position and an engagement position; a coupling pin latch for latching the coupling pin in the retracted position when engaged; and an actuator pad for disengaging the coupling pin latch. The actuator pad may be at the back of the jaw.

The clevis hitch for example then may comprise a lever for manually moving the coupling pin to the retracted position and engaging the coupling pin latch.

The clevis hitch may also may comprise lateral locking pins for engaging with openings to hold the clevis hitch at a selected height. The clevis hitch arrangement may also include lateral support rails having openings for receiving the lateral locking pins. Thus, the clevis hitch can be slid up and down the lateral support rails.

The clevis hitch for example may comprise a lever for retracting the lateral locking pins . This enables height adjustment or removal of the clevis type latch from the towing vehicle.

The clevis hitch may comprise a jaw having upper and lower jaw members. In which case, the lower jaw member may have a forward-facing surface for engagement with angled side flanges of a coupler pin housing of the support structure.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
FIG. 1 shows a perspective view of a prior art clevis hitch arrangement as disclosed in EP 2100757; and
FIG. 2 shows a clevis hitch arrangement in accordance with this disclosure.

### DETAILED DESCRIPTION

Aspects of the invention will be described with reference to the FIGs.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the FIGs are merely schematic and are not drawn to scale. It should also be understood that the same reference numerals are used throughout the FIGs to indicate the same or similar parts.

This disclosure provides a storage support for a clevis hitch of the type having a coupling pin movable between a retracted position and an engagement position. The storage support has a support structure for slidably receiving the clevis hitch after it has been removed from a towing vehicle. In an embodiment, the support structure has a base for slidably receiving the clevis hitch and defines an opening for receiving the coupling pin of the clevis hitch when the clevis hitch is located on the base in a coupling position and the coupling pin is moved to the engagement position. The support structure has at least one guide member for cooperation with the clevis hitch to assist an operator in sliding the clevis hitch into the coupling position.

In an example for use with an automatic clevis hitch, an actuator of the storage support enters a jaw of the clevis hitch and disengages a coupling pin latch of the clevis hitch, when the clevis hitch is fully received by the support structure. This moves the coupling pin to an engagement position in which it is received by the opening of the storage support.

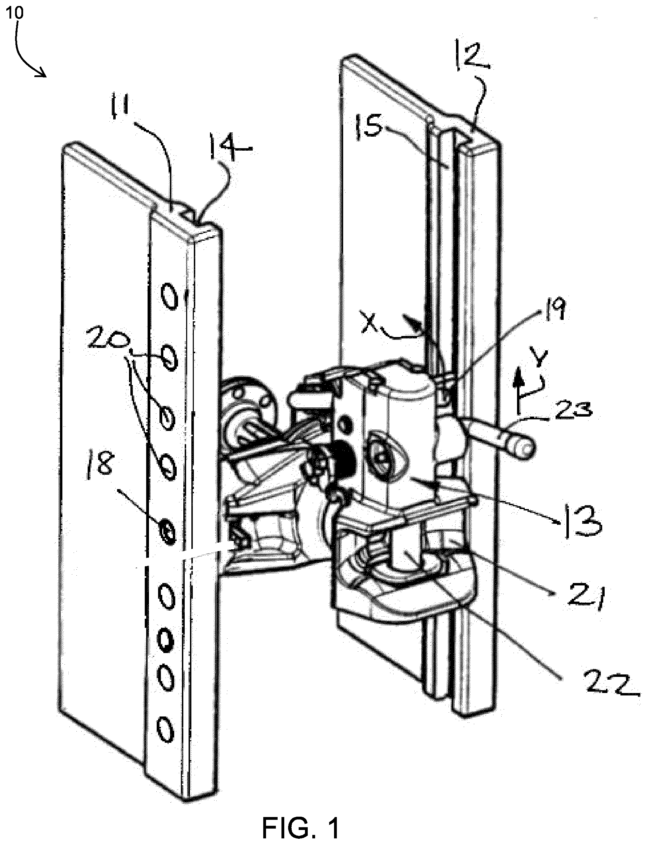

FIG. 1 shows a perspective view of a clevis hitch arrangement as disclosed in EP 2100757.

As shown in FIG. 1, the clevis hitch arrangement 10 has a pair of generally vertically extending support rails 11 and 12, which are bolted to the rear of the tractor in a spaced relationship. A clevis hitch 13 is vertically slidable relative to support rails 11 and 12 in vertically extending grooves 14 and 15.

This disclosure relates to the stowing of a clevis hitch 13 that has been removed from the support rails of a towing vehicle. The clevis hitch 13 may for example need to be removed to enable better access to the PTO of a towing vehicle, such as an agricultural tractor.

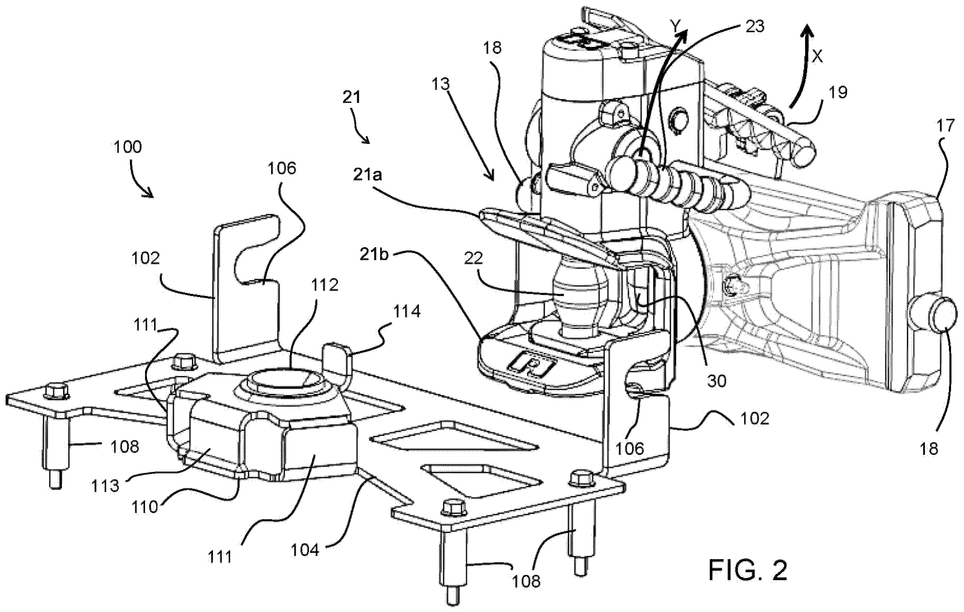

FIG. 2 shows an example of a clevis hitch arrangement 10 in accordance with an aspect of the invention. It shows the combination of clevis hitch 13 and a support structure 100. The clevis hitch 13 may have a known existing design.

In particular, the clevis hitch 13 is provided with lateral shoes 17 (one of which can be seen in FIG. 2) which slide in the grooves 14 and 15 of the support rails 11 and 12 as shown in FIG. 1, respectively. The clevis hitch 13 can be locked in a number of different vertical positions using locking pins 18, which engage openings 20 (shown in FIG. 1) formed in the support rails 11 and 12. The locking pins 18 can be retracted to disengage the openings 20 by moving the lever 19 in the direction of the arrow X of FIG. 2. This allows the clevis hitch 13 to slide vertically within the grooves 14 and 15.

The clevis hitch 13 also includes a jaw 21 in which a vertically moveable coupling pin 22 (a coupling bolt between the clevis hitch 13 and the towing eye of the towed vehicle) is provided. The coupling pin 22 sits within an opening of the towing eye when the towing eye is inserted in the jaw 21. This coupling pin 22 can be moved by movement of the handle 23 as indicated by the arrow Y in FIG. 2 between a raised, retracted position and a lowered, engagement position. FIG. 2 shows the coupling pin 22 in its lowered, engagement position.

The clevis hitch 13 illustrated in FIG. 2 is of the automatic type in which a latch mechanism is used to hold the coupling pin 22 in a retracted position (i.e., a raised position) against a spring bias until the towing eye is inserted. The towing eye engages the latch mechanism to release the coupling pin 22 that is then biased into engagement with the towing eye.

The latch mechanism for example comprises an actuator pad 30 at the back of the jaw 21, so that when the towing eye is inserted into the jaw 21, the most forward surface of the towing eye engages with the actuator pad 30. This happens when the towing eye is at the correct position such that the opening in the towing eye is aligned with the coupling pin 22. The coupling pin 22 is then released from the retracted position and hence is urged through the opening of the towing eye. Thus, the coupling pin 22 is latched in a retracted position (so allowing the towing eye to be inserted into the jaw), and the engagement of towing eye with the actuator pad 30 disengages the latch such that the coupling pin then drops (and is driven by a spring force) and extends across the jaw opening through the opening of the towing eye. The jaw 21 may have upper and lower jaw members 21a, 21b. The upper and lower jaw members 21a, 21b may have opposed, inclined surfaces that help guide a towing eye to the correct position for engagement of the coupling pin 22.

An example of this type of arrangement is disclosed in EP 0490019. The handle 23 is latched in the upward position, and it can be released from this latched position either manually (using another handle) or by the towing eye engaging with the actuator pad 30 (which is in that example is part of a lever). The coupling pin is spring biased to the engagement position. EP 0490019 discloses one arrangement of levers and cams to implement the autolocking function. However, other arrangements may be used. The skilled person will know of different designs that implement a latching of the coupling pin in the retracted position, and use the towing eye to automatically disengage the latch.

The clevis hitch arrangement 10 of this disclosure has a dedicated storage support 100 for the clevis hitch 13. The storage support 100 can be attached to the tractor, for example at a side beside the steps or at the rear of the tractor.

The clevis hitch 13 typically has a weight of more than 20 kg, so the operator must use two hands for disassembly of the clevis hitch 13 from the support rails. The design in accordance with this disclosure enables the storage support 100 to be employed without the user needing to take their hands off the disassembled clevis hitch 13 until the weight of the clevis hitch 13 is at least partially taken by the storage support 100 and in an embodiment not unit the clevis hitch 13 is securely locked to the storage support 100.

The storage support 100 comprises a support structure, which in this example comprises a pair of lateral support arms 102 and a sheet metal base 104. Each lateral support arm 102 has a slot 106. The slot 106 enables fore-aft sliding of a clevis hitch 13 across the base by sliding the extended locking pins 18 within the slots 106.

A fixing arrangement 108, such as a set of threaded shafts (e.g., bolts), is provided for fixing the storage support 100 to a vehicle.

The base 104 has a coupling pin receiver 110, which defines an opening 112 for receiving the coupling pin 22. In this way, the clevis hitch 13 can be locked to the storage support 100 by engagement of the coupling pin 22 in the opening 112 when the clevis hitch 13 is in a correct coupling position in which the coupling pin 22 is aligned with the opening 112. The coupling pin receiver may define a housing in which the lower jaw member 21b of the clevis hitch jaw 21 locates. The housing may have angled side flanges 111 and an end flange 113 which cooperate with forward facing surfaces of the lower jaw member 21b to locate the clevis hitch 13 in the coupling position. The opening 112 may be defined in an upper wall of the housing.

For use with an automatic clevis hitch, the base 104 also has an actuator 114. The actuator 114 emulates the latch release function of the front surface of a towing eye. It has the function of a terminal for pushing on the actuator pad 30 of an automatic clevis hitch. When the clevis hitch 13 is fully slid into the coupling position, e.g., when the locking pins 18 are fully received in the slots 106, the actuator 114 reaches the back of the jaw 21 and thus engages with the actuator pad 30 of the automatic clevis hitch. The latch is then released so that the coupling pin 22 is driven through the opening 112.

In this way, there is automatic actuation of the clevis hitch 13, i.e., release of the latch. This latch function, in normal operation, locks the clevis hitch 13 when the towing eye is in the coupling position.

In use, the operator first disengages the towed implement, using lever 23. This latches the coupling pin 22 in the retracted position. After this, the clevis hitch 13 can be removed from the vertical support rails 11, 12 by retracting the locking pins 18 using lever 19.

After removing the clevis hitch 13, the locking pins 18 for example are extended automatically once the lever 19 is no longer engaged. Thus, the operator can let the handle 19 go, and the locking pins 18 will then extend. Alternatively, the operator can operate the lever to extend or reextend the locking pins 18.

The operator then slides the clevis hitch 13 into the front of the storage support 100, with the locking pins 18 received in the slots 106 and the jaw 21 directed toward the pin receiver 110. The initial contact is between the bottom of the clevis hitch 13 with the base 104. This serves as a guide and relieves the operator of carrying some weight right away. The clevis hitch 13 slides over the base 104 until the forward facing surfaces of the lower jaw engage with the side flanges 111 and the end flange 113 of the coupling pin receiver 110. This helps to center the clevis hitch in the coupling position.

Once the locking pins 18 of the clevis hitch 13 are fully inserted into the slots 106, the latch mechanism is automatically triggered by the actuator 114 so that the clevis hitch 13 is fixed in the storage support with the coupling pin 22 engaged in the opening 112 to lock the clevis hitch 13 to the storage support 100.

To ensure a correct locking of the coupling pin 22 into the opening 112, the opening serves as a guide that forces the clevis to pin slide into place, pulling the hitch forward and into place if necessary. Thus, even if the coupling pin 22 is engaged too early due to tolerances, a correct connection will be made.

The operator can thus manipulate the clevis hitch 13 from the tractor (or other towing vehicle) to the storage support 100 using both hands at all times. Once received in the storage support 100 and the coupling pin 22 engaged, the clevis hitch 13 cannot fall off the tractor.

The lateral support arms and slots 106 together with the slide flanges 111 and, in some cases, the end flange 113 of the coupling pin receiver 110 act as a guide system that cooperates with the clevis hitch 13 to assist the operator in sliding the clevis hitch 13 into the correct coupling position for engagement of the coupling pin 22 in the opening 112.

The storage support 100 may be used with existing designs of clevis hitch 13, and hence does not need modification to existing autolocking designs of clevis hitch 13.

The example above shows only one possible implementation. For example, the clevis hitch 13 may be guided into the coupling position on the support structure using other guide features than the slots 106 for the pins 18. No matter how the clevis hitch 13 is positioned on or in the support structure, once in the final coupling position, the latch mechanism of the clevis type latch is disengaged by the actuator 114 automatically to lock the clevis hitch 13 to the support structure.

The storage support 100 can also be used with manual type clevis hitches. In this case, the operator would have to manually lower the coupling pin 22 when the clevis hitch 13 is in the coupling position to lock it to the storage support 100. Though this requires the operator to use one hand to lower the coupling pin 22, at this stage most of the weight of the clevis hitch 13 is borne by the base 104 of the storage support and so many of the advantages are still retained. For use with a manual type of clevis hitch, the actuator 114 could be omitted.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

## Claims

1. A storage support (100) for a clevis hitch (13) having a coupling pin (22) movable between a retracted position and an engagement position, the storage support (100) comprising:
a support structure having a base (104) for receiving the clevis hitch (13);
the support structure defining an opening (112) for receiving the coupling pin (22) of the clevis hitch (13) when the clevis hitch (13) is located on the base (104) in a coupling position and the coupling pin (22) is moved to the engagement position;
the support structure having at least one guide member for cooperation with the clevis hitch (13) to assist an operator in locating clevis hitch (13) on the base (104) in the coupling position.

2. The storage support (100) of claim 1, wherein the clevis hitch (13) is an automatic clevis hitch, the support structure having actuator (114) for entering a jaw (21) of the clevis hitch (13) when the clevis hitch (13) is mounted to the support structure (100), wherein the actuator (114) is configured to disengage a coupling pin latch of the clevis hitch (13) when the clevis hitch (13) is positioned on the base (104) in the coupling position, thereby causing the coupling pin (22) to move from the retracted position to the engagement position.

3. The storage support (100) of claim 1 or claim 2, wherein the at least one guide member comprises lateral supports (102) each having a guide slot (106) for receiving a lateral locking pin (18) of the clevis hitch (13).

4. The storage support (100) of any one of claims 1 to 3, further comprising a coupling pin receiver (110) which at least partially defines the opening (112), the coupling pin receiver (110) comprising a housing for receiving a lower jaw member (21b) of the clevis hitch (13), and wherein the at least one guide member comprises angled side flanges (111) of the housing configured for engagement with a forward surface of the lower jaw member (21b) to guide the clevis hitch (13) to the coupling position.

5. The storage support (100) of any one of claims 1 to 4, further comprising a fixing arrangement (108) for fixing the storage support (100) to a vehicle.

6. The storage support (100) of claim 2, or any one of claims 3 to 5 when dependent on claim 2, wherein the actuator (114) comprises a terminal for engaging with an actuator pad (30) at the back of the jaw (21) of the clevis hitch (13).

7. A storage support (100) for a clevis hitch (13), comprising:
a support structure for slidably receiving the clevis hitch (13);
an actuator (114) for entering a jaw (21) of the clevis hitch (13) when the clevis hitch (13) is slidably received by the support structure, wherein the actuator (114) is configured to disengage a coupling pin latch of the clevis hitch (13) when the clevis hitch (13) is fully received by the support structure to move the coupling pin (22) from a latched open position to a closed position; and
an opening (112) for receiving the coupling pin (22) when the coupling pin (22) moves to the closed position.

8. A clevis hitch arrangement (10) comprising:
a clevis hitch (13); and
the storage support (100) of any one of claims 1 to 7.

9. The clevis hitch arrangement (10) of claim 8, wherein the clevis hitch (13) comprises:
a jaw (21);
a coupling pin (22) having a retracted position and an engagement position;
a coupling pin latch for latching the coupling pin (22) in the retracted position when engaged; and
an actuator pad (30), at the back of the jaw (21), for disengaging the coupling pin latch.

10. The clevis hitch arrangement (10) of claim 9, wherein the clevis hitch (13) comprises a lever (19) for manually moving the coupling pin (22) to the retracted position and engaging the coupling pin latch.

11. The clevis hitch arrangement (10) of any one of claims 8 to 10, wherein the clevis hitch (13) comprises lateral locking pins (18) for engaging with openings (20) in lateral support rails (11, 12) to hold the clevis hitch (13) at a selected height within the lateral support rails (11, 12).

12. The clevis hitch arrangement (10) of claim 11, wherein the clevis hitch arrangement further comprises lateral support rails (11, 12) having openings (20) for receiving the lateral locking pins (18).

13. The clevis hitch arrangement (10) of any one of claims 11 to 12, wherein the clevis hitch (13) comprises a lever (19) for retracting the locking pins (18).

14. The clevis hitch arrangement (10) of claim 9, or any one of claims 10 to 13 when dependent on claim 9, wherein the jaw (21) comprises an upper jaw member (21a) and a lower jaw member (21b).
